# EUROPEAN PATENT APPLICATION

(11) **EP 4 838 175 A1**
(43) Date of publication of application: **11.11.2026**
(21) Application number: 25174927.1
(22) Date of filing: 08.05.2025
(51) Int. Cl.: G01C 21/16, G01C 25/00

(54) **A METHOD FOR DETECTING AN ERROR IN AN INERTIAL MEASUREMENT UNIT**

(71) Applicant: KB Intellectual Property GmbH & Co. KG, 82049 Pullach (DE)
(72) Inventor: SIRÁK, Márton, 80809 München (DE); SCHÜTZ, Lukas, 80809 München (DE)

(57) **Abstract**

A method for detecting an error in at least one inertial measurement unit, IMU, in a vehicle is disclosed. The vehicle includes at least a first IMU (110) at a first position and a second IMU (120) at a second position. The method comprises the steps of receiving (S110) first measurement data from the first IMU (110); receiving (S120) second measurement data from the second IMU (120); comparing (S130) the first measurement data from the first IMU (110) with the second measurement data from the second IMU (120); detecting (S140) the error based on the comparison.

## Description

The present invention relates to a method for detecting an error in at least one inertial measurement unit, IMU, in a vehicle, and an apparatus for detecting the error in IMUs and, in particular, to an error detection method for an IMU.

Inertial measurement units (IMUs) may include one or more accelerometers and gyroscopes and may widely be used in different kinds of vehicles to improve the safety, navigation, or stability control and other purposes. The monitoring of IMUs is thus very important. In particular, the detection of hardware faults, miscalibrations, misalignments, etc. should be detected before detrimental effects occur. There are some industry-proven methods of varying complexity and quality for all kind of vehicles, but further improvements are still needed.

With the advent of autonomous driving, redundancy is expected to ensure safe operation. This applies to IMUs as well. The correct, fault-free operation of redundant IMUs shall, however, be also continuously monitored, thus avoiding having an undetected issue which would reveal itself only when the primary IMU becomes unusable. This would counteract the purpose of said redundancy. However, while it is usually possible and needed to continuously run highly advanced, but also computationally costly monitoring routines for the primary IMU, using the same routines for the redundant sensors is unfavorable due to the combination of the mentioned high cost and low risk. In addition, such advanced, vehicle model-based monitoring routines generally require inputs from other measurement devices such as steering angle sensors or wheel speed sensors, further increasing the cost and complexity of such a system in a redundant setting.

DE 10 2020 131 669 B3 discloses a conventional method, which needs at least three IMUs and compares respective measurements for each two of them. If an outlier exceeding a predetermined threshold is detected, the corresponding IMU can be deemed erroneous. This conventional method measures accelerations and angular rates along three axes and allows the IMUs to be located at any known position.

US 2013 / 160 543 A1 discloses a second conventional method, which relies on only two IMUs. Here, a similar comparison is used to detect sensor failures. However, in this case, only the presence of a faulty IMU is determined, without indicating the specific erroneous measurement device. Thus, both IMUs have to be declared malfunctioning. Although it detects a fault with less IMUs and measures fewer accelerations and angular rates than those used in the first conventional method, the two IMUs must be arranged in a predetermined way. This restricts the geometry. Finally, transformations of specific forces from one physical location to another are, e.g., described in US 2017 / 043 785 A1.

Although the conventional methods describe an error detection in IMUs without using inputs from other types of measurement devices, like steering angle sensors or wheel speed sensors, further improvements are needed. In particular, there is a demand for a system which is able to provide a low-cost alternative that ensures a fault-free operation of redundant IMUs using inputs only from these two IMUs.

At least some of the problems of the conventional device as described before are overcome by a method of claim 1 or an apparatus according to claim 13. The dependent claims refer to further advantageous realizations of the subject matter of the independent claims.

The present invention relates to a method for detecting an error in at least one inertial measurement unit, IMU, of a vehicle. The vehicle includes at least a first IMU at a first position and a second IMU at a second position. The at least one IMU may be the first IMU and/or the second IMU.

The method comprises the steps of:
- receiving first measurement data from the first IMU;
- receiving second measurement data from the second IMU;
- comparing the first measurement data from the first IMU with the second measurement data from the second IMU;
- detecting the error based on the comparison.

Although the first position and the second position can be arbitrary, their relative position is assumed to be predetermined (i.e. known). Same applies to the orientation, the relative orientation of the first IMU and the second IMU may be predetermined but can be arbitrary otherwise. Since the vehicle is assumed to be rigid, both measurements (the first measurement providing the first measurement data and the second measurement providing the second measurement data) should be compatible with each other. Thus, they can be used to determine errors.

According to embodiments, it is also possible to implement an initialization or calibration step to determine the orientations of the IMUs relative to a vehicle frame and relative to each other. For example, one may assume that newly installed IMUs are operating correctly and thus should generate consistent sensor data. If they produce different sensor data, they are oriented relative to each other (e.g. measure in different coordinate systems). Moreover, by performing a predefined acceleration in the initialization step such as an accelerating/braking the vehicle without steering or steering the vehicle with or without braking, the measured accelerations should coincide with predefined acceleration. Any deviation can then be used to determine the relative orientation of the IMUs with respect to the vehicle frame. After this calibration or initialization, the IMUs are ready for use. According to embodiments, their correct operation will be monitored periodically.

Optionally, the step of receiving first measurement data further includes receiving status information from the first IMU, wherein the status information indicates at least one of the following for the first IMU: an operation status, validity of the data, an error, a time stamp, an identifier of the IMU, an error code. Likewise, the step of receiving second measurement data may further include receiving status information from the second IMU, wherein the status information indicates at least one of the following for the second IMU: an operation status, validity of the data, an error, a time stamp, an identifier of the IMU, an error code. This status information may indicate a potential error, but also a power failure or a lost connection to the sensing element(s).

According to embodiments only one IMU, e.g. either the first IMU or the second IMU, may provide the status information. Moreover, each IMU may comprise a control unit for handling the sensor data and/or for providing the status information and/or other data. Alternatively, or in addition, the status information for the first IMU and/or for the second IMU may be transmitted by the respective IMU itself or by another entity (e.g. an electronic control unit of the vehicle). The status information may be generated by a monitoring routine of the respective IMU and may provide an indication about a possible erroneous behavior of the respective IMU. In the simplest case, the status information is a Boolean variable (TRUE or FALSE) indicating whether the IMU is expected or operate correctly or not.

Optionally, the status information is generated from outputs of at least one of the following: a vehicle model-based monitoring routine, a vehicle speed sensor, a steering angle sensor, a brake sensor, a positioning system. A vehicle model-based monitoring may be implemented in the vehicle - in particular, if it is operated autonomously or even driverless. This vehicle model may calculate a vehicle behavior caused by actuations of actuators such as braking, steering, accelerating etc. An output of the vehicle model are accelerations acting on the vehicle and this output may be utilized to check the validity or status of the IMUs. In addition, at a standstill, the acting gravity in a vertical direction can be further used to check plausibility of the measured accelerations (e.g. it should align with the gravity vector). Similarly, any speed change (sensed by a speed sensor) without steering the vehicle may be utilized to derive an indication for the validity of the data provided by the IMUs (e.g. if the deviation exceeds a threshold).

Optionally, the step of detecting the error based on the comparison may include determining a likelihood of the error being present in the at least one IMU based on the status information.

Optionally, the step of comparing includes compensating for the relative position and/or orientation of the first IMU and the second IMU and, thereafter, comparing the compensated first measurement data with the compensated second measurement data.

Optionally, the step of comparing may include transforming the first measurement data and/or the second measurement data into a common coordinate system. Thereafter, the resulting first measurement data (transformed or not) can be compared with the resulting second measurement data (transformed or not). The transformed first measurement data may be equal to the first measurement data. Likewise, the transformed second measurement data may be equal to the second measurement data. This may be the case if the common coordinate system is at the first position or at the second position.

According to embodiments, no transformation is performed or needed if the first and second position are close to each other (e.g. if both IMUs are integrated in one unit or are closer than a predefined threshold, e.g. less than 5 cm or less than 20 cm). The decision to make a transformation or not may also rely on deviations in the results, e.g. if the step of comparing yields effectively the same results for transformed and not transformed data (e.g. within a tolerance range).

Optionally, the step of transforming into the common coordinate system may include a position compensation for the first position and the second position being different and/or an orientation compensation the first IMU and the second IMU being oriented differently. Therefore, the transformation may involve a relative translation and/or a relative rotation. The transformation may also be an identity operation (e.g., if there is nothing to transform). The first position of the first IMU and second position of the second IMU and their orientations may be known or may be determined (at least partly) in the initialization as described before.

Optionally, the step of detecting the error based on the comparison may further include identifying an erroneous IMU. In addition, at least one of the following may be performed:
- compensating the detected error,
- deactivating the erroneous IMU,
- replacing the erroneous IMU by another IMU installed in the vehicle,
- informing other components of the vehicle about the erroneous IMU.

According to embodiments, the compensation may include a shift and/or a rotation in the measured data or some of the measured data (e.g., adjusting the entire or some part of the measured data). Moreover, a system-wide information about the error may be issued to inform other components in the vehicle about the detected fault.

For example, if an error is detected in the first IMU or in the second IMU, one option for addressing the issue is to compensate for the detected error through adjustments in the measured data, such as shifting or rotating the data to correct inaccuracies. Additionally, the system may deactivate the erroneous IMU or replace it with another IMU installed in the vehicle. Informing other components of the vehicle about the error may be a crucial step to ensure that all parts of the system are aware of the issue. This helps maintaining the integrity and accuracy of the IMU data, which is essential for the proper functioning of the vehicle's systems that rely on precise measurements.

Optionally, the step of comparing the first measurement data with the second measurement data may include one or more of the following:
- calculating at least one cross-check value,
- comparing the calculated at least one cross-check value with an associated threshold value,
- determining a likelihood of the error in the at least one IMU.

Optionally, the calculation of the cross-check value may be based on at least one of the following:
- a difference in the received first measurement data and the received second measurement data,
- a difference in the transformed first measurement data and the transformed second measurement data,
- a difference in acceleration values,
- a difference in angular velocities,
- a difference in angular momenta.

Optionally, the step of determining the likelihood of the error in the at least one IMU includes:
- debouncing of results of the determination (e.g. a counter-based debouncing); and/or
- based thereon, determining, with a higher confidence, a likelihood of the error.

The first measurement data and the second measurement data may be received with a delay relative to each other. Then, optionally, the method may comprise at least one of the following:
- determining the delay,
- taking into account the determined delay when comparing measurement data and/or when determining the error,
- compensating effects caused by the delay.

The described method may also be implemented in software or on a computer program product or on a computer-readable storage device. Embodiments can be realized in a control unit (data processor or an apparatus) implemented by software or a software module in an ECU of the vehicle. Thus, further embodiments relate to a machine-readable storage device with instructions stored thereon comprising program code for carrying out the method for detecting an error in at least one inertial measurement unit in a vehicle, when the program code is executed on a data processing unit.

Embodiments relates further to an apparatus for detecting an error in at least one inertial measurement unit, IMU, of a vehicle, the vehicle includes at least a first IMU at a first position and a second IMU at a second position. The apparatus comprises a data processor being configured to perform or control the method for detecting an error in at least one inertial measurement unit in a vehicle as described before. For this, software may be installed in the apparatus to enable the desired function(s) as defined in the methods.

Optionally, the apparatus for detecting an error in at least one IMU may comprise or may be an integrated unit with the first IMU and/or the second IMU and/or the data processor. The technical effect provided by the apparatus with integrated IMUs is that no compensation is needed, because both integrated units are at the same place and are fixedly oriented with respect to each other. For example, the integrated unit with the first IMU and the integrated unit with the second IMU can be located in the same location within the vehicle.

According to embodiments, the apparatus can be a controller or any electronic control unit (ECU) of the vehicle.

Embodiment relates further to a vehicle, especially a commercial vehicle with a first IMU at a first position and a second IMU at a second position and an apparatus for detecting an error in at least one of the IMUs. According to embodiments the vehicle can be operated autonomously or even driverless. The vehicle may also be a trailer or a towing vehicle.

Embodiments ensure a fault-free operation of redundant inertial measurement units and are suitable in particular for road vehicles such as a truck, a tractor, a trailer, a bus, a long-haul vehicle, or trailer combinations, which are predominantly commercial vehicles that comprises two or more connected units, typically towing vehicles and one or more towed vehicles. The vehicle may also include small trailers and caravans, which may be towed by passenger cars and light vans, or for example articulated commercial vehicles comprising tractors and semi-trailers.

Some examples of the system and/or method will be described in the following by way of examples only, and with respect to the accompanying figures, in which:
- Fig. 1: depicts schematically a flow diagram for a method for detecting an error in at least one inertial measurement unit of a vehicle according to an embodiment of the present invention.
- Fig. 2A-2B: depict a vehicle with a first IMU, a second IMU and an apparatus according to different embodiments.

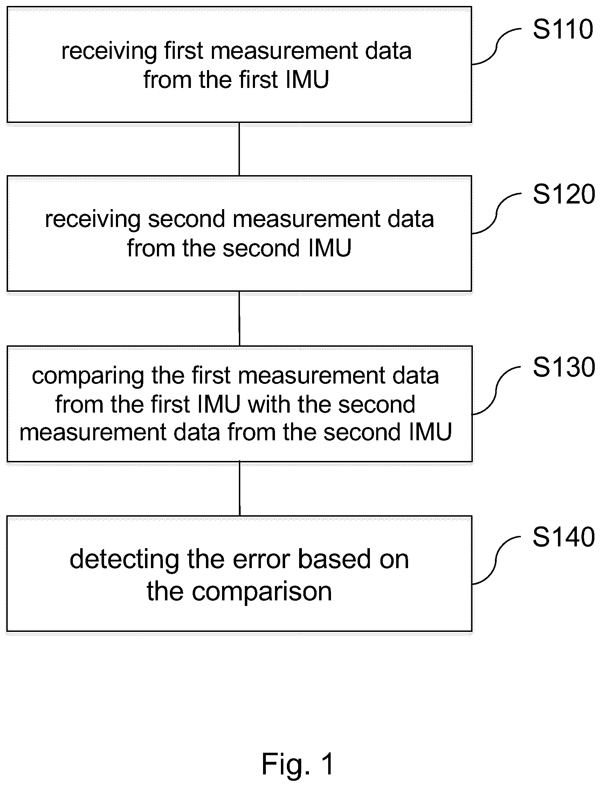

**Fig. 1** depicts a schematically a flow diagram of a method for detecting an error in at least one inertial measurement unit, IMU, of a vehicle. The method comprises:
- S110: receiving first measurement data from the first IMU 110;
- S120: receiving second measurement data from the second IMU 120;
- S130: comparing the first measurement data from the first IMU 110 with the second measurement data from the second IMU 120;
- S140: detecting the error based on the comparison.

According to embodiments, the vehicle may comprise a system having only two IMUs or more than two IMUs (the first IMU 110 and the second IMU 120 being part thereof). The method can be implemented in the vehicle (e.g. in a controller or an apparatus) and may determine - not only the presence of a fault in the system - but also determine which of the IMUs has failed. For this, external validity information for at least one of the IMUs may be provided.

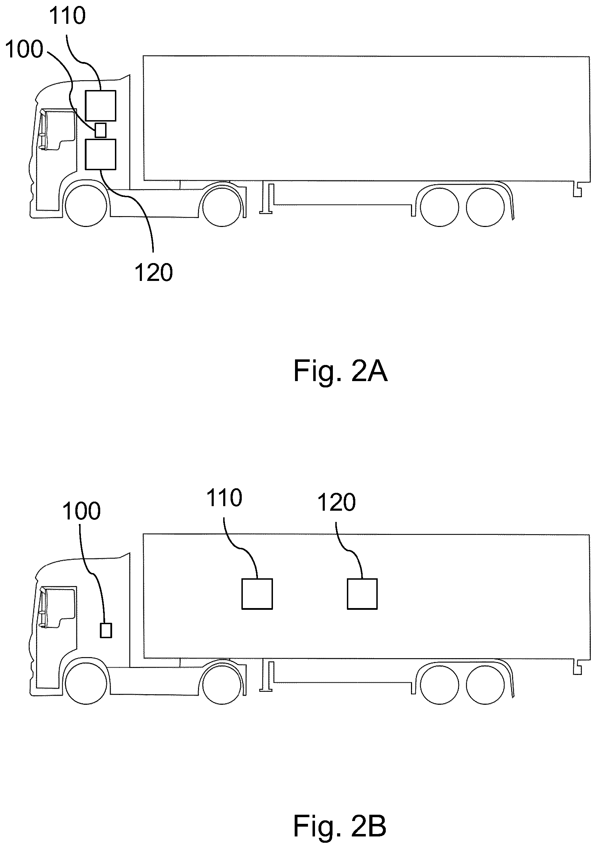

**Fig. 2A** and **2B** depict embodiments of a vehicle, especially a commercial vehicle, comprising an apparatus 100, the first IMU 110 and the second IMU 120. The apparatus 100 is in communication with the first IMU 110 and the second IMU 120 (e.g. over a vehicle bus or utilizing a wireless communication) and is able to detect an error in at least one of the IMUs 110, 120. The IMUs 110, 120, can be installed at any part of the vehicle and do not need to be installed in proximity to each other. However, both IMUs 110, 120 should be installed on the same vehicle, i.e. either the tractor or the trailer.

**Fig. 2A** shows an exemplary embodiment with the first IMU 110 and the second IMU 120 located in the tractor of a vehicle combination. **Fig. 2B** shows an embodiment where the first IMU 110 and the second IMU 120 are both installed in or on the trailer (towed vehicle). Both IMUs 110, 120 may be integrated in one unit and located at the same location or may be installed at different locations in the respective part of the vehicle combination. The vehicle may comprise already a main IMU and further IMUs, for example as part of stability systems such as ESC (electronic stability control), navigational systems, traction control, and other systems. Any two of the installed IMUs may be the first IMU 110 and the second IMU 120.

The apparatus 100 can be a controller or any electronic control unit (ECU) in the vehicle and may comprise or may be a data processor configured to perform or control the error detection method according to embodiments. Optionally, the apparatus 100 may comprise at least one storage device and a network interface to store respective software and to communicate with first and second IMU 110, 120.

According to embodiments, the first and second IMUs 110, 120 are configured to measure (linear) accelerations and angular rates along or about three axes. They may be positioned and oriented arbitrarily. However, with respect to each other, their (relative) position and (relative) orientation being known and constant.

The first IMU 110 may measure three accelerations (*ã*_{1,}*ₓ, ã*_{1,}*_{y}, ã*_{1,*z*}) and three angular rates (*ω̃*_{1,*x*}, *ω̃*_{1,}*_{y}, ω̃*_{1,*z*}) (angular velocities) along the axes of a Cartesian coordinate system '1'. The second IMU 120 may measure three accelerations (*ã*_{2,*x*}, *ã*_{2,}*_{y}, ã*_{2,*z*}) and three angular rates (*ω̃*_{2*,x*}, *ω̃*_{2,}*_{y}, ω̃*_{2,*z*}) along the axes of Cartesian coordinate system '2'.

Of the independent measured values (from here onwards: degrees of freedom), the acceleration and angular rate vectors are defined by the following equations (1) and (2), wherein ***i*** = 1 ... 2: ${{a}^{˜}}_{i} = {\left[{{a}^{˜}}_{i , x} {{a}^{˜}}_{i , y} {{a}^{˜}}_{i , z}\right]}^{⊤}$ Eq.(1) ${{ω}^{˜}}_{i} = {\left[{{ω}^{˜}}_{i , x} {{ω}^{˜}}_{i , y} {{ω}^{˜}}_{i , z}\right]}^{⊤}$ Eq.(2)

Knowing the orientation of the first IMU 110 and the second IMU 120, the above measurement vectors in equation (1) and equation (2) may be transformed to be as if they were measured along axes parallel to those of a Cartesian coordinate system '0', defined by the following equations (3) and (4), wherein ***i*** = 1... 2: ${a}_{i} = {\left[{a}_{i , x} {a}_{i , y} {a}_{i , z}\right]}^{⊤}$ Eq.(3) ${ω}_{i} = {\left[{ω}_{i , x} {ω}_{i , y} {ω}_{i , z}\right]}^{⊤}$ Eq.(4)

The position of the first IMU 110 and second IMU 120 may be unconstrained (arbitrary) but constant and given by position vectors in Cartesian coordinate system '0', defined by the following equations (5) and (6): ${r}_{1} = {\left[{r}_{1 , x} {r}_{1 , y} {r}_{1 , z}\right]}^{⊤}$ Eq.(5) ${r}_{2} = {\left[{r}_{2 , x} {r}_{2 , y} {r}_{2 , z}\right]}^{⊤}$ Eq.(6)

The validity of one of the IMUs (first IMU 110 or second IMU 120) may also be known based on an advanced monitoring routine, using, if necessary, additional sensors (e.g. speed sensors, steering sensors), but not using the other IMU. For this, according to embodiments, together with the first/second measurement data further status information are received, wherein the status information provides an indication for the validity. For example, the status information indicates for the one IMU an operation status and/or validity of the data and/or an error and/or a time stamp and/or an identifier of the IMU and/or an error code. This status information may be generated from outputs of at least one of the following: a vehicle model-based monitoring routine, a vehicle speed sensor, a steering angle sensor, a brake sensor, a positioning system.

According to embodiments, the validity or the status information may be a Boolean signal v, where a "1" or "TRUE" stands for valid data for all six degrees of freedom measured by the corresponding IMU, while "0" or "FALSE" stands for at least one invalid, erroneous signal of the six measured degrees of freedom.

According to embodiments, the system or apparatus 100 may further comprise one or more processors (from here onwards: processor 100), which may receive the measured data **ã***ᵢ* and ***ω̃**ᵢ* from both first IMU 110 and second IMU 120, have their above given positions **r***ᵢ* and orientation configurable, as well as run the below described error detection routine. The processor 100 may also receive the status information (e.g. the *v* signal) denoting the either IMU's validity (e.g., the first IMU 110).

According to embodiments, based on this status information, the method for detecting an IMU fault in the system in step S140 may include determining a likelihood of the error being present in the at least one IMU. For example, if the detected error in step S140 indicates a malfunctioning and if the status information associated to the first IMU 110 shows a FALSE indicating at least one erroneous signal for first IMU 110, it is very likely that the cause of the detected error in step S140 is the first IMU 110 (and not the second IMU 120).

According to embodiments, the status information can be obtained from various sources such a vehicle model monitoring. In addition, at a standstill, acting gravity in the vertical direction can be further used to check plausibility of the measured accelerations (it should align with the gravity vector). Similarly, any speed change (sensed by a speed sensor) without steering the vehicle may be utilized to derive an indication for the validity of the data provided by the IMUs (e.g. if the deviation exceeds a threshold).

According to embodiments, the two IMUs (first IMU 110, second IMU 120) may be initialized, which may include sensor startup routines and a calibration. In this initialization the concrete orientations of both IMUs 110, 120 can be verified or determined, e.g. assuming correct operation at startup time. In addition, communication may be established between the IMUs 110, 120 and the processor 100. For example, the IMUs 110, 120 may send measured degrees of freedom periodically. A detection routine may also be run periodically, with a time period matching the larger (if different) time period of the two IMUs 110, 120 sending periodically data.

After initialization, the following looping logic may be used to detect faults in every period:
- the processor 100 may receive up to date measurement data **a**₁, ***ω***₁, **a**₂ and ***ω***₂ from the first IMU 110 and from the second IMU 120, and an up to date validity data ***v*;**
- if the received validity data indicates a detected fault (error) in the corresponding IMU 110 or 120, a fault in the corresponding IMU 110, 120 may be indicated by the processor 100. The processor 100 may then return to the start of this loop and wait for the next period;
- otherwise (e.g. if the received validity data does not indicate an error), the processor 100 may calculate a cross-check value for each degree of freedom, arranged into a vector **Δ**.

The vector **Δ** can be determined as follow:
The processor 100 may calculate the time derivative of ***ω***₁ and ***ω***₂, denoted, respectively, ***ω̇***₁ and ***ω̇***₂.

Since the first IMU 110 and the second IMU 120 may be installed at distant locations, they might be subject to different accelerations (e.g. when making turns). Thus, according to embodiments, a step of transforming the first measurement data and/or the second measurement data into a common coordinate system '0' is performed. For this, considering the system is attached to or acts as a rigid body, the processor 100 may calculate accelerations **a**₁ and **a**₂ transformed to the origin O of Cartesian coordinate system '0', using equation (7): ${a}_{i}^{O} = {a}_{i} + {\dot{ω}}_{i} \times \left(-{r}_{i}\right) + {ω}_{i} \times \left({ω}_{i}\times \left(-{r}_{i}\right)\right)$ Eq.(7) wherein ***i*** = 1 ... 2, and the superscript ***O*** denotes the transformed value. Therefore, the step of transforming the sensor data into the common coordinate system includes a position compensation for the first position and the second position being different

Thus, the difference in the measured values due to the difference in the physical placement (location) of the two IMUs (first IMU 110 and second IMU 120) may be compensated for.

Further, cross-check values may then be calculated as defined by the following equation (8): $Δ = \left[\begin{matrix}\left|{a}_{1}^{O}-{a}_{2}^{O}\right| \\ \left|{ω}_{1}-{ω}_{2}\right|\end{matrix}\right]$ Eq.(8) wherein each component of this vector **Δ** represents a cross-check value.

The processor 100 may compare each degree of freedom's cross-check value, i.e. each component of **Δ**, to a predetermined value threshold. The deviation may indicate the likelihood of an error. Therefore, according to embodiments, the step of comparing the first measurement data with the second measurement data (step S130) includes:
- calculating at least one cross-check value,
- comparing the calculated at least one cross-check value with an associated threshold value,
- determining a likelihood of the error in the at least one **IMU** 110, 120 (e.g. based on the comparison).

The first measurement data and the second measurement data may be received with a delay relative to each other. Therefore, according to embodiments, the method may comprise the step of determining the delay and taking into account the determined delay when comparing measurement data and/or when determining the error, and compensating effects caused by the delay. Thereafter, the comparison of (transformed) first measurement data with (transformed) second measurement data can be performed.

The vector **Δ** defines as cross-check values a difference in acceleration values and/or a difference in angular velocities. According to further embodiments, the calculation of the cross-check value is likewise based on at least one of the following:
- a difference in the received first measurement data and the received second measurement data,
- a difference in the transformed first measurement data and the transformed second measurement data,
- a difference in angular momenta.

These differences represent further cross-check values and respective threshold values can be utilized to indicate the error in one of this IMUs 110, 120.

If a cross-check value exceeds the corresponding threshold value, according to embodiments, a debouncing counter for the given degree of freedom may be increased. Otherwise, if the cross-check value does not exceed the corresponding threshold value, the same debouncing counter may be decreased. The amount by which the debouncing counter is increased or decreased may be based on the distance of the cross-check value in question to the corresponding threshold value, or any other circumstance.

The thus modified debouncing counter value may be saturated to fit between a predetermined minimum value and maximum value. If the saturated debouncing counter has reached the predetermined maximum value, the processor 100 may indicate or detect the error or fault in the respective IMU 110, 120 for which no validity data *v* is available or for which the validity data *v* indicate an error (e.g. *v* is FALSE). The processor 100 may also indicate the degree of freedom corresponding to the debouncing counter, which has reached this threshold, e.g. which component of the vector **Δ** (which acceleration or angular velocity). Therefore, according to embodiments, the likelihood of the error is determined based on a debouncing of results of the determination (e.g. by utilizing the debouncing counter). Based thereon, a higher confidence in the likelihood of an error is achieved.

Depending on the configuration, if the corresponding debouncing counter of all degrees of freedom has reached the predetermined minimum value, the processor may also indicate no fault in the above IMU 110, 120 - even if the logic has previously detected a fault. The processor 100 may then return to the start of this loop, waiting for the next period.

If validity data v (or status information) is unavailable, according to embodiments, the above logic may be altered to indicate a presence of an IMU fault and the faulty degree of freedom in the system, without indicating the faulty IMU itself. However, if validity data ***v*** (or status information) is available, embodiment will indicate the faulty IMU.

According to embodiments, upon identifying an erroneous IMU 110, 120 at least one of the following may be performed:
- compensating the detected error,
- deactivating the erroneous IMU 110, 120,
- replacing the erroneous IMU 110, 120 by another IMU installed in the vehicle,
- informing other components of the vehicle about the erroneous IMU 110, 120.

Therefore, when a redundancy is required for the IMUs, the function of a faulty IMU 110, 120 can be taken over by another IMU present in the vehicle. As set out before, the vehicle may include multiples IMUs that can be accessed via a vehicle network so that a faulty unit can be replaced by another operating correctly.

It will be apparent for those skilled in the art, that various modifications can be made for the above-described system and error detection method.

The error detection method according to embodiments may also be implemented in software or a computer program product and the order of steps may not be important to achieve the desired effect. A person of skill in the art would readily recognize that steps of various above-described methods may be performed by programmed computers. Embodiments are also intended to cover program storage devices, e.g., digital data storage media, which are machine or computer readable and encode machine-executable or computer-executable programs of instructions, wherein the instructions perform some or all of the acts of the above-described methods, when executed on the computer or processor.

Advantageous aspects of embodiments can be summarized as follows: A system for detecting errors in an inertial measurement unit includes, according to embodiments, a first inertial measurement unit 110 measuring accelerations and angular rates along the axes of three-dimensional Cartesian coordinate system '1', a second inertial measurement unit 120 measuring accelerations and angular rates along the axes of three-dimensional Cartesian coordinate system '2', and a processor (apparatus 100). The processor 100 is configured to receive measurement data from the first and second inertial measurement units, wherein the relative position and orientation of the first and second inertial measurement units 110, 120 are known. The processor 100 is further configured to compensate, if needed, the difference in the measured signals of the first and second inertial measurement units due to their relative position and orientation, and to detect an inertial measurement unit error based on the received, and, if needed, compensated, measurement data.

According to embodiments, the processor 100 may further be configured to receive information about the validity of the measured signals of at least one of the inertial measurement units. The processor 100 may further be configured to know which inertial measurement units the received validity information corresponds to. The processor 100 may further be configured, in case of a detected inertial measurement unit error, to detect which of the two inertial measurement units is erroneous based on the received validity information.

According to embodiments, the processor 100 may implement a method for detecting an inertial measurement unit error. The method may include the step of calculating at least one cross-check value based on the difference in the received, and, if needed, compensated, measurement data from the first and second inertial measurement units. The method may further include the step of comparing the calculated cross-check values to corresponding threshold values and of determining if the presence of an inertial measurement unit error is likely, based on the result of the comparison of the calculated cross-check values to the corresponding threshold values.

According to embodiments, the method that is used by the processor 100 for detecting an inertial measurement unit error, further includes the step of debouncing the result of the determination of the likely presence of an inertial measurement error. The method may further include the step of determining, with a higher confidence, if the presence of an inertial measurement unit error is likely, based on the result of the debouncing.

The method may further include the step of determining in which inertial measurement unit 110, 120 the presence of the detected fault is likely based on the received validity information.

According to embodiments, the system may further include the processor 100 being further configured to consider, and, if needed, to compensate any delay in the data received by the processor.

According to embodiments, the first and second inertial measurement units 110, 120 being located on a road vehicle.

According to embodiments, at least one of the first and second inertial measurement units 110, 120 being integrated into one physical unit with the processor 100.

According to embodiments, the processor 100 is further configured to cause a system-wide reaction based on the result of the fault detection.

The description and drawings merely illustrate the principles of the disclosure. It will thus be appreciated that those skilled in the art will be able to devise various arrangements that, although not explicitly described or shown herein, embody the principles of the disclosure and are included within its scope.

Furthermore, while each embodiment may stand on its own as a separate example, it is to be noted that in other embodiments the defined features can be combined differently, i.e. a particular feature descripted in one embodiment may also be realized in other embodiments. Such combinations are covered by the disclosure herein unless it is stated that a specific combination is not intended.

### LIST OF REFERENCE SIGNS

- 110: first inertial measurement unit (first IMU)
- 120: second inertial measurement unit (second IMU)
- 130: (at least one) data processor

## Claims

1. A method for detecting an error in at least one inertial measurement unit, IMU (110, 120), in a vehicle, the vehicle includes at least a first IMU (110) at a first position and a second IMU (120) at a second position,
**characterized by**
- receiving (S110) first measurement data from the first IMU (110);
- receiving (S120) second measurement data from the second IMU (120);
- comparing (S130) the first measurement data from the first IMU (110) with the second measurement data from the second IMU (120);
- detecting (S140) the error based on the comparison.

2. The method of claim 1, wherein the steps of receiving (S110) first measurement data further includes receiving status information from the first IMU (110) and/or the step of receiving (S120) second measurement data further includes receiving status information from the second IMU (120), the status information indicating at least one of the following of the first IMU (110) or of the second IMU (120): an operation status, validity of the data, an error, a time stamp, an identifier of the IMU, an error code.

3. The method of claim 2, wherein the status information is generated from outputs of at least one of the following: a vehicle model-based monitoring routine, a vehicle speed sensor, a steering angle sensor, a brake sensor, a positioning system.

4. The method of any one of claims 1 to 3, wherein the step of comparing (S130) includes compensating for the relative position and/or orientation of the first IMU (110) and the second IMU (120) and, thereafter, comparing the compensated first measurement data with the compensated second measurement data.

5. The method of claim 2 or claim 3, wherein the step of detecting (S140) includes:
determining a likelihood of the error being present in the first IMU (110) or in the second IMU (120) based on the received status information.

6. The method of any one of claims 1 to 5, wherein the step of detecting (S140) includes identifying the first IMU (110) or the second IMU (120) being an erroneous IMU, and further includes at least one of the following:
- compensating the detected error,
- deactivating the erroneous IMU,
- replacing the erroneous IMU by another IMU installed in the vehicle,
- informing other components of the vehicle about the erroneous IMU.

7. The method of any one of claims 1 to 6, wherein the step of comparing (S130) the first measurement data with the second measurement data includes:
- calculating at least one cross-check value,
- comparing the calculated at least one cross-check value with an associated threshold value,
- determining a likelihood of the error in the at least one IMU (110, 120).

8. The method of claim 7, wherein the calculation of the cross-check value is based on at least one of the following:
- a difference in the received first measurement data and the received second measurement data,
- a difference in the compensated first measurement data and the compensated second measurement data,
- a difference in acceleration values,
- a difference in angular velocities,
- a difference in angular momenta.

9. The method of claim 7 or of claim 8, wherein the step of determining the likelihood of the error in the at least one IMU (110, 120) includes:
- debouncing of results of the determination; and
- based thereon, determining, with a higher confidence, a likelihood of the error.

10. The method according to any one of claim 1 to 9, wherein the first measurement data and the second measurement data are received with a delay relative to each other, the method further comprising at least one of the following:
- determining the delay,
- taking into account the determined delay when comparing measurement data and/or when determining the error,
- compensating effects caused by the delay.

11. A machine-readable storage device with instructions stored thereon comprising program code for carrying out the method according to one of claims 1 to 10, when the program code is executed on a data processing unit.

12. An apparatus (100) for detecting an error in at least one inertial measurement unit, IMU (110, 120), of a vehicle, the vehicle includes at least a first IMU (110) at a first position and a second IMU (120) at a second position, the apparatus (100) comprising a data processor being configured to perform or control the method according to any one of claims 1 to 10.

13. The apparatus of claim 12, further comprising an integrated unit with the first IMU (110) and/or the second IMU (120) and/or the data processor.

14. A vehicle, especially a commercial vehicle, with a first IMU (110) at a first position and a second IMU (120) at a second position and an apparatus according to claim 12 or claim 13.
